# EUROPEAN PATENT APPLICATION

(11) **EP 2 610 453 A1**
(43) Date of publication of application: **03.07.2013**
(21) Application number: 11819850.6
(22) Date of filing: 18.08.2011
(51) Int. Cl.: F01N 3/08, B01D 53/94, B63B 35/00, B63H 21/32, B63J 3/02, B63J 99/00, C01C 1/04, F01N 3/20, F01N 5/02, F01N 5/04

(54) **MARINE DENITRATION SYSTEM AND MARINE VESSEL EQUIPPED WITH THE SAME**

(30) Priority: 26.08.2010 JP 2010189504
(71) Applicant: Mitsubishi Heavy Industries, Ltd., Tokyo 108-8215 (JP)
(72) Inventor: MURATA, Satoru, Tokyo 108-8215 (JP); HIRAOKA, Naohiro, Tokyo 108-8215 (JP)
(74) Representative: HOFFMANN EITLE
(86) International application number: PCT/JP2011/068669
(87) International publication number: WO 2012/026387

(57) **Abstract**

Provided is a marine vessel denitration system capable of supplying, in a stable manner, the electrical energy required when producing ammonia for use as a reducing agent in denitration. Provided is the marine vessel denitration system (1) including: an ammonia producing device (2) that has a hydrogen producing unit (81) for producing hydrogen from water and a nitrogen producing unit (83) for producing nitrogen from air, and that produces ammonia from the hydrogen produced by the hydrogen producing unit (81) and the nitrogen produced by the nitrogen producing unit (83); and an SCR catalyst unit (4) that is provided in a second exhaust pipe (L2), which is an exhaust gas passage of a diesel engine (3) for marine vessel propulsion, and performs denitration of the exhaust gas with the ammonia produced by the ammonia producing device. The marine vessel denitration system (1) including: a hybrid turbocharger (5); and a storage battery (67), wherein an electric power output of the hybrid turbocharger (5) and the storage battery (67) is supplied to the ammonia producing device (2).

## Description

### {Technical Field}

The present invention relates to a marine vessel denitration system mounted on a marine vessel and suitably used, for example, for denitration of exhaust gas from a diesel engine, and to a marine vessel equipped with the same.

### {Background Art}

Denitration equipment is mounted on marine vessels to remove nitrogen oxide (NOx) produced by the diesel engine (main engine) used for marine vessel propulsion.
In the below-mentioned Patent Document 1, an invention which enables production of ammonia for use as a reducing agent of a denitration catalyst on a marine vessel is disclosed. Since the ammonia can be produced on the marine vessel, there is no need to transport liquid ammonia onto the marine vessel and store the liquid ammonia on the marine vessel. Moreover, liquid ammonia is handled as a hazardous material and so, if used, special storage equipment such as a leak detection sensor and double walled piping must be installed. However, if as much ammonia as required can be produced on the marine vessel, there is no need to install the special storage equipment.

### {Citation List}

### {Patent Literature}

{PTL 1}
   Japanese Unexamined Patent Application Publication No. H11-292531

### {Summary of Invention}

### {Technical Problem}

To produce ammonia on the marine vessel, electrical energy is required to drive transfer pumps, perform electrolysis of water and the like. In the above-mentioned Patent Document 1, use of electric power from a diesel engine electric power generator which is an auxiliary engine is described.
However, generally speaking, because diesel engine electric power generators have a lower thermal efficiency than the main engine, when the electric power for producing ammonia is obtained from a diesel engine electric power generator, more energy is wasted. Hence, from the point of view of saving energy, use of the diesel engine electric power generator is not favorable.
It is desirable that the electric power required for producing ammonia is supplied in a stable manner irrespective of the electric power demand on the marine vessel, the load on the main engine or the like.

The present invention was conceived upon consideration of the above circumstances and has an objective of providing a marine vessel denitration system and a marine vessel equipped with the same, the marine vessel denitration system being capable of providing, with a low energy consumption, a stable supply of the electrical energy required when producing ammonia for use as a reducing agent for denitration.

### {Solution to Problem}

To solve the above-described problem, the marine vessel denitration system and the marine vessel equipped with the same of the present invention employs the following means.
Specifically, the marine vessel denitration system according to a first aspect of the present invention includes: an ammonia producing device that has a hydrogen producing unit for producing hydrogen from water and a nitrogen producing unit for producing nitrogen from air, and that produces ammonia from the hydrogen produced by the hydrogen producing unit and the nitrogen produced by the nitrogen producing unit; and a denitration catalyst unit that is provided in an exhaust gas passage of a main engine for marine vessel propulsion and/or an electric power generating engine, and that performs denitration of the exhaust gas with the ammonia produced by the ammonia producing device. The marine vessel denitration system includes an electric power generator that generates electric power using the exhaust energy from the main engine, and a storage battery electrically connected to the electric power generator, wherein the electric power generator and the storage battery are connected to an electric power system that supplies electric power to the ammonia producing device.

The ammonia producing device has the hydrogen producing unit that produces hydrogen from water and the nitrogen producing unit that produces nitrogen from air, and produces ammonia from the hydrogen and the nitrogen produced by the hydrogen producing unit and the nitrogen producing unit, respectively. Thus, the ammonia can be produced on the marine vessel using water and air as raw materials, and there is no need to provide space on the marine vessel for storing reducing agents such as liquid ammonia (aqueous ammonia solution or the like) or urea. Hence, the marine vessel denitration system can be installed on the marine vessel without ensuring a large space.
The electric power generator that generates electric power using the exhaust energy from the main engine is connected to the electric power system that supplies electric power to the ammonia producing device. Since the electric power output of the electric power generator is supplied to the ammonia producing device, the ammonia producing device can be operated with a low energy consumption. Also, the exhaust energy from the main engine can be used effectively and so it is possible to avoid increasing the capacity or a number of separately provided electric power generating auxiliary engines, such as diesel engine electric power generators.
Moreover, due to the inclusion of the storage battery connected to the electric power system that supplies electric power to the ammonia producing device, electric power from the storage battery can be used when fluctuations in the load on the main engine result in fluctuations in the electric power output from the electric power generator. This arrangement is particularly effective at a low load on the main engine when the sufficient electric power output from the electric power generator cannot be obtained. Hence, electric power can be supplied in a stable manner to the ammonia producing device. Further, because the storage battery is connected to the same electric power system as the electric power generator, excessive electric power generated by the electric power generator can be stored.
When an electric power generating engine is provided in the marine vessel, the inclusion of the storage battery suppresses load fluctuations and thus allows the capacity and size of the electric power generating engine to be reduced.

It is more preferable for the marine vessel denitration system according to the first aspect to include an electric heater that heats the exhaust gas being introduced to the denitration catalyst unit, and the electric heater is supplied with electric power from the electric power system.

In a selective catalytic reduction (SCR) catalyst, which is the method mainly applied in denitration catalyst units, the risk of deterioration increases as the temperature of the exhaust gas decreases. According to the first aspect, the exhaust gas temperature is increased using the electric heater, and so deterioration of the SCR catalyst can be prevented.
The electric heater is supplied with electric power in a stable manner from the electric power system to which the electric power generator and the storage battery are connected.

Further, in the marine vessel denitration system according to the first aspect, photovoltaic power generator may be connected to the electric power system.

Since the photovoltaic power generator is connected to the electric power system, electric power output from the photovoltaic power generator can be supplied to the storage battery. As a result, electric power can be supplied in a more stable manner.

In the marine vessel denitration system according to the first aspect, an external electric power input unit for receiving electric power from an electric power source outside the marine vessel may be connected to the electric power system.

The external electric power input unit for receiving an electric power supply from an electric power source outside the marine vessel is connected to the electric power system. Hence, the marine vessel can, for example, be supplied with electric power from an external (on shore) source when berthed. As a result, it is not necessary to run the electric power generating engine when the marine vessel is berthed, and a so-called zero emission state can thus be achieved.

Further, in the marine vessel denitration system according to the first aspect, an electric power generator connected to a turbocharger generating electric power by obtaining rotation energy of an exhaust gas turbocharger of the main engine may be used as the electric power generator.

One known example of a turbocharger including an electric power generator connected to a turbocharger that generates electric power by obtaining rotation energy of an exhaust gas turbocharger of the main engine is a hybrid turbocharger. Here, the electric power generator connected to a turbocharger is used as the electric power generator for supplying electric power to the ammonia producing device. As a result, the exhaust energy from the main engine can be used effectively.

Further, in the marine vessel denitration system according to the first aspect, a power turbine side electric power generator that generates electric power with a power turbine driven by the exhaust gas from the main engine may be used as the electric power generator.

Here, the output electric power from the power turbine side electric power generator that generates electric power with the power turbine driven by the exhaust gas from the main engine is used in the ammonia producing device. As a result, the exhaust energy from the main engine can be used effectively.

Further, in the marine vessel denitration system according to the first aspect, a heterogeneous turbine side electric power generator that generates electric power using the power turbine driven by exhaust gas from the main engine and a steam turbine driven by steam generated with an exhaust gas boiler utilizing the exhaust gas from the main engine may be used as the electric power generator.

In the heterogeneous turbine side electric power generator, different types (heterogeneous) of turbines such as a power turbine and a steam turbine are connected. When the heterogeneous turbine side electric power generator is used, electric power is generated using both the power turbine driven by the exhaust gas from the main engine and the steam turbine driven by steam generated with the exhaust gas boiler utilizing the exhaust gas from the main engine. Hence, the exhaust energy from the main engine can be used more effectively.

Further, in the marine vessel denitration system according to the first aspect, a steam turbine side electric power generator that generates electric power with the steam turbine driven by steam generated with the exhaust gas boiler utilizing the exhaust gas from the main engine may be used as the electric power generator.

In the marine vessel denitration system according to the first aspect, a heat transmitting medium turbine side electric power generator that generates electric power using a turbine driven by a vaporized heat transmitting medium may be used as the electric power generator, the heat transmitting medium being vaporized through heat exchange with heated water, and the heated water being heated by heat exchange with exhaust gas and/or cooling water of a jacket or an air cooler of the main engine.
Systems using alternative CFCs with a boiling point lower than water (such as R-245fa or R-134a), or organic heat transmitting media such as pentane or butane are well-known as the heat transmitting medium. Such systems make use of what is known as the Rankin cycle.

A marine vessel according to a second aspect of the present invention includes a main engine for marine vessel propulsion and/or an electric power generating engine, and any one of the above-described marine vessel denitration systems.

Any of the above-described marine vessel denitration systems are capable of supplying electric power in a stable manner and is therefore suitable for installation in the marine vessel.

### {Advantageous Effects of Invention}

According to the present invention, electric power output from an electric power generator generating electric power using exhaust energy from a main engine is utilized to produce ammonia. Hence, a marine vessel denitration system can be operated with a low energy consumption.
Moreover, a storage battery is provided. Hence, electric power from the storage battery can be used when fluctuations in the load on the main engine result in fluctuations in the electric power output from the electric power generator, and it is possible to supply electric power in a stable manner.

### {Brief Description of Drawings}

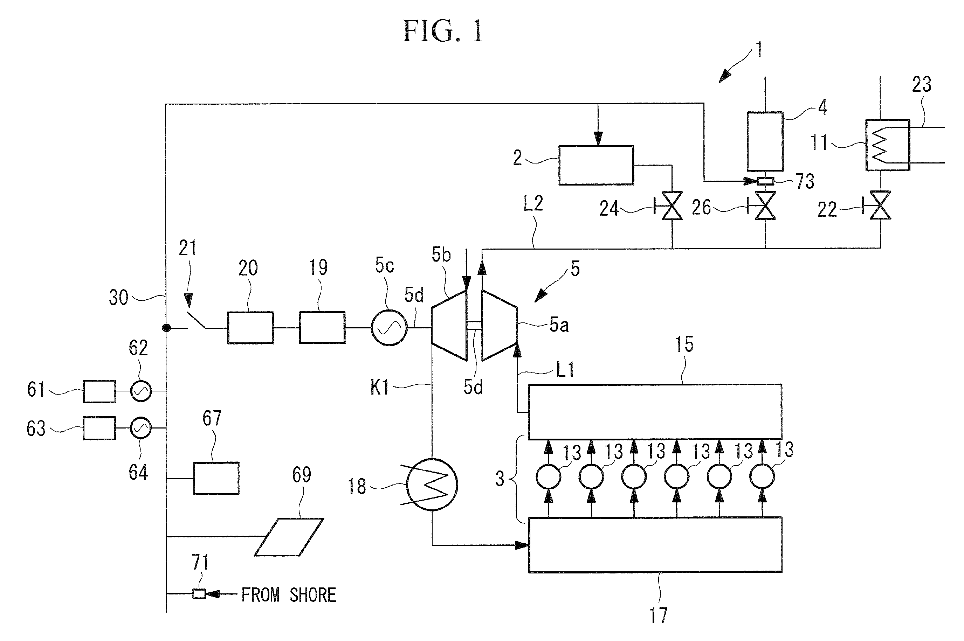

{Fig. 1}
   FIG. 1 is a schematic view illustrating a configuration surrounding a diesel engine where a marine vessel denitration system according to a first embodiment of the present invention is provided.
{Fig. 2}
   FIG. 2 is a schematic view illustrating an overview of an ammonia producing device depicted in FIG. 1.
{Fig. 3}
   FIG. 3 is a schematic view illustrating a configuration surrounding a diesel engine where a marine vessel denitration system according to a second embodiment of the present invention is provided.
{Fig. 4}
   FIG. 4 is a schematic view illustrating a configuration surrounding a diesel engine where a marine vessel denitration system according to a third embodiment of the present invention is provided.
{Fig. 5}
   FIG. 5 is a schematic view illustrating a configuration surrounding a diesel engine where a marine vessel denitration system according to a fourth embodiment of the present invention is provided.

### {Description of Embodiments}

Next, embodiments according to the present invention will be described while referring to the drawings.

### (First Embodiment)

A first embodiment of the present invention will be described below using FIG. 1.
FIG. 1 schematically illustrates a configuration surrounding a diesel engine 3 where a marine vessel denitration system 1 according to this embodiment is provided.
The marine vessel is provided with the diesel engine (main engine) 3 for marine vessel propulsion, the denitration system 1 for denitrating exhaust gas from the diesel engine 3, a hybrid turbocharger 5 driven by exhaust gas from the diesel engine 3, and an exhaust gas economizer (exhaust gas boiler) 11 that generates steam using the exhaust gas from the diesel engine 3.

Output from the diesel engine 3 is connected directly or indirectly to a screw propeller via a propeller shaft. An exhaust port of each of steam cylinder units 13 of the diesel engine 3 is connected to an exhaust manifold 15, which forms an exhaust gas collection pipe. The exhaust manifold 15 is connected to an inlet side of a turbine unit 5a of the hybrid turbocharger 5 via a first exhaust pipe L1.
Note that the denitration system 1 may be used for denitration of the exhaust gas from the electric power generating engines 61 and 63.

An intake port of each cylinder unit 13 is connected to an intake manifold 17. The intake manifold 17 is connected to a compressor unit 5b of the hybrid turbocharger 5 via an intake pipe K1. An air cooler (intercooler) 18 is installed in the intake pipe K1.

The hybrid turbocharger 5 includes the turbine unit 5a, the compressor unit 5b, and a hybrid electric power generator motor (electric power generator connected to a turbocharger) 5c. The turbine unit 5a, the compressor unit 5b, and the hybrid electric power generator motor 5c are coupled by a same rotating shaft 5d.
The hybrid electric power generator motor 5c generates electric power using rotation energy from the turbine unit 5a and assists rotation of the compressor unit 5b by obtaining electric power from a marine vessel system 30. Provided between the hybrid electric power generator motor 5c and the marine vessel electric power system 30 are, in order from the hybrid electric power generator motor 5c side, a converter 19 that converts alternating-current power to direct-current power, an inverter 20 that converts direct-current power to alternating-current power and an on-off switch 21.

In the marine vessel system 30, a first electric power generating diesel engine 61 including an electric power generator 62, a second electric power generating diesel engine 63 including an electric power generator 64, a storage battery 67, photovoltaic power generator 69 and an external electric power input unit 71 are connected in parallel.
For the storage battery 67, a lithium ion secondary battery may, for example, be preferably used. The storage battery 67 is charged by electric power from the first electric power generating diesel engine 61, the second electric power generating diesel engine 63, the photovoltaic power generator 69 and the hybrid electric power generator motor 5c. The discharging and recharging of the storage battery 67 is performed by a control unit not illustrated in the drawings.
The external electric power input unit 71 is supplied with electric power from an electric power source outside the marine vessel (an on-shore electric power source). The storage battery 67 is charged by the electric power supplied from the external electric power input unit 71.
The marine vessel system 30 is connected to the ammonia producing device 2 and a later-described electric heater 73, and electric power is supplied to the ammonia producing device 2 and the electric heater 73.

The exhaust gas economizer 11 is connected to a second exhaust pipe L2 on an outlet side of the turbine unit 5a of the hybrid turbocharger 5, and exhaust gas discharged from the main engine 3 and water supplied by a water supply pipe 23 are allowed to exchange heat so as to generate steam. On an upstream side of the exhaust gas economizer 11, an exhaust gas economizer on-off valve 22 that controls the flow of the exhaust gas is provided. A switching timing for the exhaust gas economizer on-off valve 22 is determined by a control unit not illustrated in the drawings.

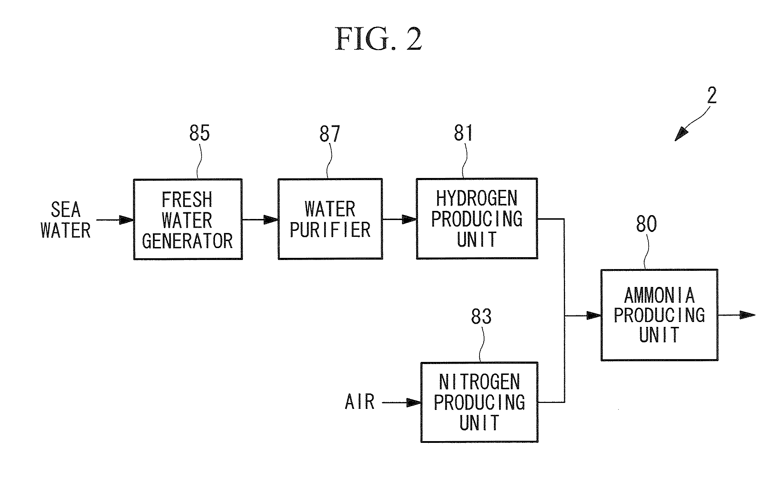

The marine vessel denitration system 1 includes the ammonia producing device 2 and an SCR catalyst unit 4 used for a selective catalytic reduction (SCR). The ammonia producing device 2 and the SCR catalyst unit 4 are connected to the second exhaust pipe L2, the ammonia producing device 2 being installed on the upstream side of the exhaust gas flow and the SCR catalyst unit 4 on the downstream side.
As illustrated in FIG. 2, the ammonia producing device 2 includes a hydrogen producing unit 81 that produces hydrogen from water, a nitrogen producing unit 83 that produces nitrogen from air, and an ammonia producing unit 80 that generates ammonia from the hydrogen and the nitrogen.
For the water used in the hydrogen producing unit 81, pure water is used. Fresh water is produced from sea water using a fresh water generator 85 mounted on the marine vessel and the fresh water is purified to pure water using a water purifier 87 mounted on the marine vessel. The hydrogen producing unit 81 uses a solid-state polymer electrolyte film method whereby an ion exchange film is used as an electrolyte to electrolyze pure water. The hydrogen produced by the hydrogen producing unit 81 is treated to remove moisture in a hydrogen drier (not illustrated in the drawings) and then fed to the ammonia producing unit 80.
In the nitrogen producing unit 83, nitrogen is produced from air using a Pressure Swing Adsorption (PSA) method or the like. The nitrogen produced by the nitrogen producing unit 83 is fed to the ammonia producing unit 80.
In the ammonia producing unit 80, the hydrogen and the nitrogen are mixed and heated, and ammonia is produced with a catalyst such as a ruthenium catalyst.

The ammonia producing device 2 consumes electric power for the electrolysis and the like of the hydrogen producing unit 81. To provide such electric power, electric power from the above-described hybrid electric power generator motor 5c is used.
As illustrated in FIG. 1, the ammonia (gas) produced in the ammonia producing device 2 is supplied directly to the second exhaust pipe L2 via an ammonia producing device on-off valve 24. Thus, the produced ammonia is supplied directly into the exhaust gas without being stored on the way. A switching timing for the ammonia producing device on-off valve 24 is determined by the control unit not illustrated in the drawings.

The exhaust gas is introduced to the SCR catalyst unit 4 from the second exhaust pipe L2 via an SCR on-off valve 26. A switching timing for the SCR on-off valve 26 is determined by the control unit not illustrated in the drawings. In the SCR catalyst unit 4, the NOx in the exhaust gas is selectively reduced by the catalyst and decomposed into non-hazardous nitrogen and steam.
On the upstream side of the SCR catalyst unit 4, the electric heater 73 is provided for heating the exhaust gas that is to be introduced.

The SCR on-off valve 26 and the exhaust gas economizer on-off valve 22 are opened and closed alternately. Specifically, when it is necessary to perform denitration of the exhaust gas, such as when the marine vessel is operating in areas where exhaust gas NOx regulations are strict, the SCR on-off valve 26 is opened and the exhaust gas economizer on-off valve 22 is closed. On the other hand, when it is not necessary to perform denitration of the exhaust gas, such as when the marine vessel is operating in areas where exhaust gas NOx regulations are relatively light, the SCR on-off valve 26 is closed and the exhaust gas economizer on-off valve 22 is opened.
Note that the SCR on-off valve 26 and the exhaust gas economizer on-off valve 22 may be replaced with a three-way valve.

Next, an operating method for the marine vessel denitration system with the above-described configuration is described.
The exhaust gas discharged from the diesel engine 3 is guided from the exhaust manifold 15 to the turbine unit 5a of the hybrid turbocharger 5 via the first exhaust pipe L1. The turbine unit 5a obtains the exhaust gas energy and is caused to rotate. The rotation energy is transmitted to the compressor unit 5b and the hybrid electric power generator motor 5c via the rotating shaft 5d. With the compressor unit 5b, air taken in (from the atmosphere) is compressed and fed to the intake manifold 17 via the air cooler 18.
With the hybrid electric power generator motor 5c, electric power is generated from the rotation energy of the turbine unit 5a and the electric power output is supplied to the marine vessel system 30. The electric power from the hybrid electric power generator motor 5c is fed to the ammonia producing device 2 and used in the electrolysis in the hydrogen producing unit 81, a transfer pump that transfers the intermediate produced gas and produced ammonia, and the like.
Further, the electric power output from the hybrid electric power generator motor 5c is supplied to the storage battery 67 connected to the marine vessel system 30.
The photovoltaic power generator 69 is connected to the marine vessel system 30, and the electric power generated from sunlight is supplied to the marine vessel system 30, used to meet a load that is connected to the marine vessel system 30 and not illustrated in the drawings, and to charge the storage battery 67.
The electric power generated by the electric power generating diesel engines 61 and 63 is similarly supplied to the marine vessel system 30, used to meet the load that is connected to the marine vessel system and not illustrated in the drawings, and to charge the storage battery 67.
When the marine vessel is berthed, an electric power supply is received from the shore via the external electric power input unit 71, and the received electric power is used to meet the load that is connected to the marine vessel system 30 and not illustrated in the drawings, and to charge the storage battery 67. In this case, the electric power generating diesel engines 61 and 63 are preferably switched off.

In the ammonia producing device 2, ammonia is produced from the hydrogen produced in the hydrogen producing unit 81 and the nitrogen produced in the nitrogen producing unit 83 using the electric power from the marine vessel system 30.

When the marine vessel is operating in an Emission Control Area (ECA) where exhaust gas NOx regulations are strict, denitration of the exhaust gas is performed. In this case, the exhaust gas economizer on-off valve 22 is closed, and the ammonia producing device on-off valve 24 and the SCR on-off valve 26 are opened.
The exhaust gas discharged from the turbine unit 5a of the hybrid turbocharger 5 passes through the second exhaust pipe L2, and is mixed with the ammonia (gas) supplied from the ammonia producing device 2. The exhaust gas mixed with the ammonia is introduced to the SCR catalyst unit 4 via the SCR on-off valve 26. If, before being introduced to the SCR catalyst unit 4, the exhaust gas temperature is lower than a predetermined value, the electric heater 73 is turned on by the control unit not illustrated in the drawings and the exhaust gas is heated. On the other hand, if the exhaust gas temperature is equal to or higher than the predetermined value, the electric heater 73 is turned off by the control unit not illustrated in the drawings. The exhaust gas that has passed through the electric heater 73 undergoes denitration in the SCR catalyst unit 4 and is subsequently discharged to the outside from a funnel not illustrated in the drawings.

When the marine vessel is operating in areas where exhaust gas NOx regulations are relatively light, denitration of the exhaust gas is not performed. In this case, the exhaust gas economizer on-off valve 22 is opened, and the ammonia producing device on-off valve 24 and the SCR on-off valve 26 are closed.
Exhaust gas discharged from the turbine unit 5a of the hybrid turbocharger 5 passes through the second exhaust pipe L2 and is introduced to the exhaust gas economizer 11 via the exhaust gas economizer on-off valve 22. In the exhaust gas economizer 11, water supplied from the water supply pipe 23 is heated by the exhaust gas to generate steam. The generated steam is used in various locations within the marine vessel. The exhaust gas discharged from the exhaust gas economizer 11 is discharged to the outside from a funnel not illustrated in the drawings.

As described above, the following effects are provided according to this embodiment.
With the ammonia producing device 2, ammonia can be produced on the marine vessel using water and air as raw materials. Hence, there is no need to provide space on the marine vessel to store a reducing agent such as liquid ammonia (such as ammonia aqueous solution) or urea. Hence, the marine vessel denitration system can be installed on the marine vessel without ensuring a large space.

The electric power output of the hybrid electric power generator motor 5c of the hybrid turbocharger 5 that generates electric power using the exhaust gas from the diesel engine 3 is supplied to the ammonia producing device 2. As a result, the ammonia producing device 2 can be operated with a low energy consumption. Also, the exhaust energy from the diesel engine 3 can be used effectively and so it is possible to avoid increasing the capacity or a number of separately provided electric power generating auxiliary engines, such as diesel engine electric power generators.

Due to the inclusion of the storage battery 67 connected to the marine vessel system 30 that supplies electric power to the ammonia producing device 2, the electric power from the storage battery 67 can be used when fluctuations in the load on the diesel engine 3 result in fluctuations in the electric power output from the hybrid turbocharger 5. In particular, this arrangement is effective when the load on the diesel engine 3 is low and sufficient electric power output from the hybrid turbocharger 5 cannot be obtained. Hence, electric power can be supplied in a stable manner to the ammonia producing device 2. Further, because the storage battery 67 is connected to the same marine vessel system 30 as the hybrid turbocharger 5, the storage battery can be charged with excessive electric power generated by the electric power generator.
Further, the inclusion of the storage battery enables load fluctuations to be suppressed and thus allows the capacity and size of the electric power generating diesel engines 61 and 63 to be reduced.

The temperature of the exhaust gas flowing into the SCR catalyst unit 4 can be increased using the electric heater 73. Hence, deterioration of the SCR catalyst can be prevented. Further, the electric heater 73 uses electric power from the marine vessel system 30 that is connected to the storage battery 67, and can therefore receive a stable electric power supply.

The photovoltaic power generator 69 is connected to the marine vessel system 30 and the electric power output of the photovoltaic power generator 69 is supplied to the storage battery 67, enabling a further improvement in the stability of the electric power supply.

The external electric power input unit 71 for receiving an electric power supply from the shore is connected to the marine vessel system 30. Hence, the marine vessel can be supplied with electric power when berthed. As a result, it is not necessary to run the electric power generating diesel engines 61 and 63 when the marine vessel is berthed, and a so-called zero emission state can thus be achieved.

### (Second Embodiment)

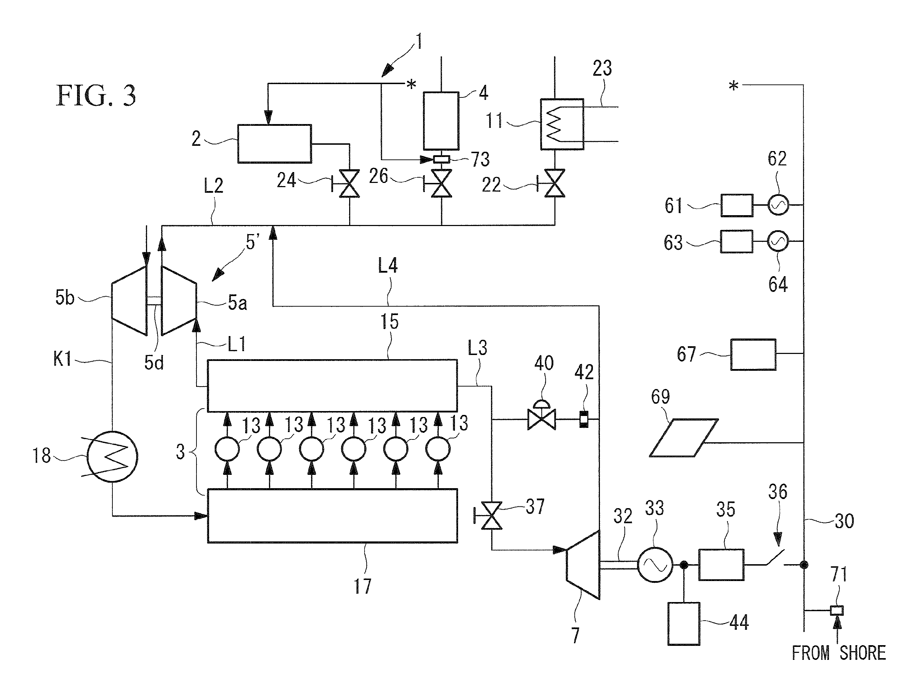

Next, a second embodiment of the present invention will be described using FIG. 3. In the above-described first embodiment, the electric power output from the hybrid turbocharger 5 (see FIG. 1) is connected to the marine vessel system 30 and used in the denitration system. This embodiment differs in that the electric power output from a power turbine (gas turbine) is connected to the marine vessel system 30 and used in the denitration system. Accordingly, the same reference signs are used for other common constituents and repetitious descriptions are omitted.

The hybrid turbocharger 5 (see FIG. 1) of the first embodiment is replaced with an exhaust gas turbocharger 5' as illustrated in FIG. 3. The turbine unit 5a driven by the exhaust gas and the compressor unit 5b that compresses air are the same as in the first embodiment.

A third exhaust pipe L3 is connected to the exhaust manifold 15, and exhaust gas from the diesel engine 3 is guided to an inlet side of a power turbine 7 via the third exhaust pipe L3. Thus, before the exhaust gas from the diesel engine 3 is supplied to the exhaust gas turbocharger 5', a portion of the exhaust gas from the diesel engine 3 is bled off and supplied to the power turbine 7. The power turbine 7 is driven to rotate by the bled exhaust gas.
Exhaust gas discharged from an outlet side of the power turbine 7 is guided to the second exhaust pipe L2 via a fourth exhaust pipe L4.

Rotation energy from the power turbine 7 is transmitted to a power turbine side electric power generator 33 via a rotational shaft 32. Electric power generated by the power turbine side electric power generator 33 is supplied to the marine vessel system 30 via the frequency converter 35 and the on/off switch 36. Accordingly, the electric power output from the power turbine side electric power generator 33 is supplied to the ammonia producing device 2.
A load bank 44 is provided between the power turbine side electric power generator 33 and the frequency converter 35. For the load bank 44, a load resistance device is used. The load bank 44 is used to consume excessive electric power from the power turbine side electric power generator 33 and thereby reduce fluctuation in the output.

An exhaust gas flow adjusting valve 37 for controlling an amount of gas introduced into the power turbine 7 is provided in the third exhaust pipe L3. A bypass valve 40 and an orifice 42 are provided between the third exhaust pipe L3 and the fourth exhaust pipe L4 to prevent over charging of the turbine unit 5a of the exhaust gas turbocharger 5' (charging that exceeds the optimal operating pressure of the engine) when the exhaust gas flow adjusting valve 37 is shut off.

According to this embodiment, the following effects are provided in addition to the effects of the first embodiment.
The electric power output from the power turbine side electric power generator 33 that generates electric power using the power turbine 7 driven by the exhaust gas from the diesel engine 3 is used in the ammonia producing device 2 via the marine vessel system 30. Hence, the exhaust energy from the diesel engine 3 can be used effectively.

### (Third Embodiment)

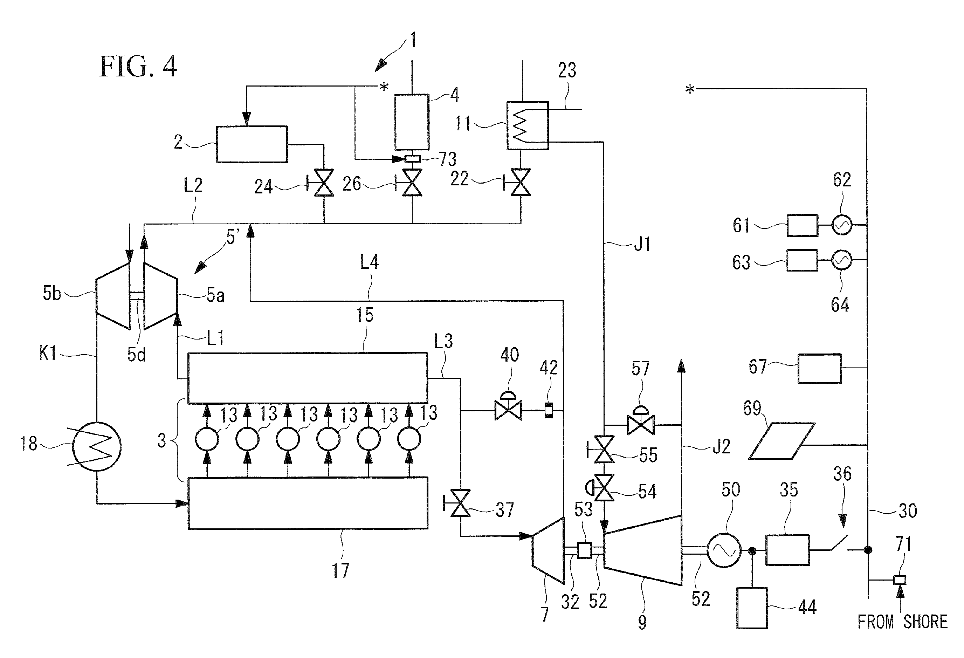

Next, a third embodiment of the present invention will be described using FIG. 4. In the above-described second embodiment, the electric power output from the power turbine 7 (see FIG. 3) is connected to the marine vessel system 30 and used in the denitration system. This embodiment differs in that the electric power output from a power turbine and a steam turbine is connected to the marine vessel system 30 and used in the denitration system. Accordingly, the same reference signs are used for other common constituents and repetitious descriptions are omitted.

As illustrated in FIG. 4, a steam turbine 9 is driven to rotate by steam generated by the exhaust gas economizer 11 and supplied via a first steam pipe J1.
The exhaust gas economizer 11 receives exhaust gas discharged from the outlet side of the turbine unit 5a of the exhaust gas turbocharger 5' via the second exhaust pipe L2, and exhaust gas discharged from the outlet side of the power turbine 7 via a fourth exhaust pipe L4. Steam generated by the exhaust gas economizer 11 is introduced to the steam turbine 9 via the first steam pipe J1. After being used in the steam turbine 9, the steam is discharged using the second steam pipe J2 and guided to a condenser not illustrated in the drawings.

The power turbine 7 and the steam turbine 9 are coupled in series to drive the heterogeneous turbine side electric power generator 50. In other words, the electric power generator 50 has different types (heterogeneous) of turbines, such as the power turbine 7 and the steam turbine 9, connected on the same shaft. Electric power generated by the heterogeneous turbine side electric power generator 50 is supplied to the marine vessel system 30 via the frequency converter 35 and the on/off switch 36. Accordingly, the electric power output from the heterogeneous turbine side electric power generator 50 is supplied to the ammonia producing device 2.

A rotational shaft 52 of the steam turbine 9 is connected to the heterogeneous turbine side electric power generator 50 via a reduction gear and a coupling not illustrated in the drawings. The rotational shaft 32 of the power turbine 7 is coupled to the rotational shaft 52 of the steam turbine 9 via a reduction gear not illustrated in the drawings and a clutch 53. For the clutch 53, a clutch that engages and disengages at predetermined speeds, such as a Synchro-Self-Shifting (SSS) clutch is favorably used.

The first steam pipe J1 is provided with a steam flow adjusting valve 54 for controlling an amount of steam introduced to the steam turbine 9 and an emergency shut-off valve 55 to shut off the supply of steam to the steam turbine 9 in an emergency. A steam bypass valve 57 is provided between the first steam pipe J1 and the second steam pipe J2 to adjust the flow rate of steam bypassing the steam turbine 7.

According to this embodiment, the following effects are provided in addition to the effects of the first embodiment and the second embodiment.
Electric power is generated by the power turbine 7 driven by the exhaust gas from the diesel engine 3 and by the steam turbine 9 driven by steam generated by the exhaust gas economizer 11 using the exhaust gas from the diesel engine 3. Hence, the exhaust energy from the diesel engine 3 can be used more effectively.

### (Fourth Embodiment)

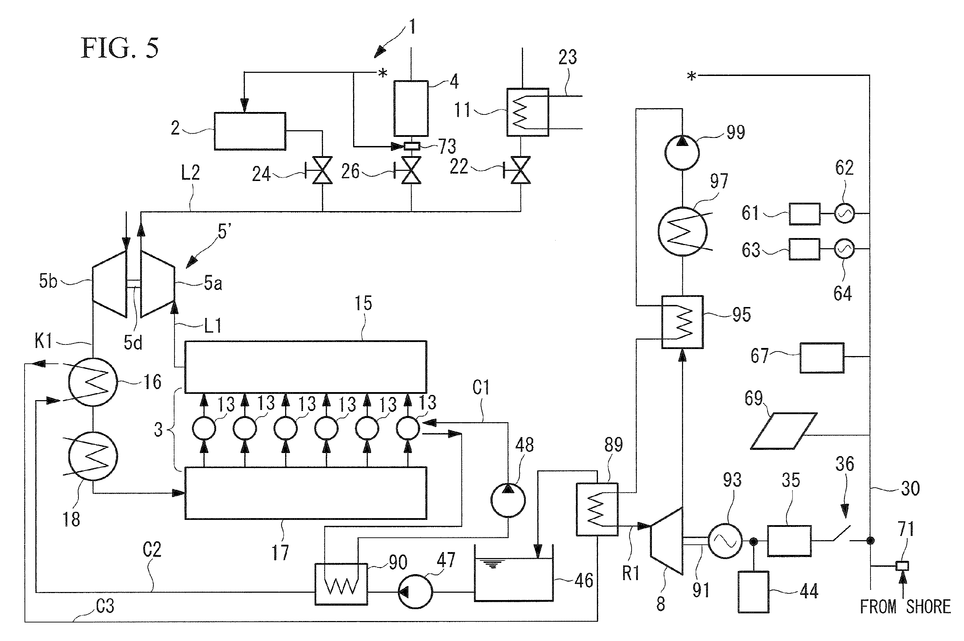

Next, a fourth embodiment of the present invention will be described using FIG. 5. In the above-described third embodiment, the electric power output from the power turbine 7 and the steam turbine 9 is connected to the marine vessel system 30 and used in the denitration system. This embodiment differs in that the electric power output from a heat transmitting medium turbine is connected to the marine vessel system 30 and used in the denitration system. Accordingly, the same reference signs are used for other common constituents and repetitious descriptions are omitted.

As illustrated in FIG. 5, a jacket water heat exchanger 90 is provided in a second cooling water pipe C2. Jacket water circulated through a first cooling water pipe C1 and a cylinder unit 13 by a circulation pump 48 is introduced to the jacket water heat exchanger 90, thereby heating cooling water introduced from a cooling water tank 46.
Cooling water pumped from the cooling water tank 46 by a circulation pump 47 and heated in stages by being passed through a second air cooler 16 via the heat exchanger 90 and the second cooling water pipe C2 is introduced to a heat exchanger 89 by a third cooling water pipe C3.
A heat transmitting medium turbine 8 is driven to rotate by supplying the heat transmitting medium vaporized by the heat exchanger 89 via a first heat transmitting medium pipe R1. After being used in the heat transmitting medium turbine 8, the vaporized heat transmitting medium undergoes heat exchange with low-temperature heat transmitting medium in an economizer 95, and is then condensed in a condenser 97 and recirculated into the system by a circulation pump 99.
In the configuration of FIG. 5, the heat transmitting medium undergoes heat exchange with cooling water that has passed through the jacket water heat exchanger 90 and the second air cooler 16. Note, however, that a configuration in which the heat transmitting medium undergoes heat exchange with water heated by heat exchange with the exhaust gas from the engine is also possible.

Rotation energy from the heat transmitting medium turbine 8 is transmitted to a heat transmitting medium turbine side electric power generator 93 via a rotational shaft 91. Electric power generated by the heat transmitting medium turbine side electric power generator 93 is supplied to the marine vessel system 30 via the frequency converter 35 and the on-off switch 36. Accordingly, the electric power output from the heat transmitting medium turbine side electric power generator 93 is supplied to the ammonia producing device 2.

According to this embodiment, the following effects are provided in addition to the effects of the first embodiment, second embodiment, and third embodiment.
The electric power output from the heat transmitting medium turbine side electric power generator 93 that generates electric power using the heat transmitting medium turbine 8 driven by the heat transmitting medium vaporized through heat exchange with cooling water of the diesel engine 3 is used in the ammonia producing device 2 via the marine vessel system 30. Hence, the low-temperature exhaust energy from the diesel engine 3 can be used effectively.

In the above-described first embodiment and second embodiment, a configuration with an exhaust gas economizer 11 is described. Note, however, that a configuration with the exhaust gas economizer 11 omitted is also possible.

Further, in the third embodiment, the power turbine 7, the third exhaust pipe L3, and the fourth exhaust pipe L4 may be omitted and electric power may be generated using the steam turbine 9 alone.

**{Reference Signs List}**

| | |
|---|---|
| 1 | Marine vessel denitration system |
| 2 | Ammonia producing device |
| 3 | Diesel engine (main engine) |
| 4 | SCR catalyst unit |
| 5 | Hybrid turbocharger |
| 5' | Exhaust gas turbocharger |
| 5c | Hybrid electric power generator motor (turbocharger side electric power generator) |
| 7 | Power turbine |
| 8 | Heat transmitting medium turbine |
| 9 | Steam turbine |
| 11 | Exhaust gas economizer (exhaust gas boiler) |
| 30 | Marine vessel electric power system |
| 33 | Power turbine side electric power generator |
| 50 | Heterogeneous turbine side electric power generator |
| 67 | Storage battery |
| 69 | Photovoltaic power generator |
| 71 | External electric power input unit |
| 73 | Electric heater |
| 81 | Hydrogen producing unit |
| 83 | Nitrogen producing unit |
| 93 | Heat transmitting medium turbine side electric power |
| | generator |

## Claims

1. A marine vessel denitration system, comprising: an ammonia producing device that includes a hydrogen producing unit for producing hydrogen from water and a nitrogen producing unit for producing nitrogen from air, and that produces ammonia from the hydrogen produced by the hydrogen producing unit and the nitrogen produced by the nitrogen producing unit; and
a denitration catalyst unit that is provided in an exhaust gas passage of a main engine for marine vessel propulsion and/or an electric power generating engine, and performs denitration of the exhaust gas with the ammonia produced by the ammonia producing device,
wherein the marine vessel denitration system comprising
an electric power generator that generates electric power using the exhaust energy from the main engine and/or the electric power generating engine; and
a storage battery electrically connected to the electric power generator, wherein
the electric power generator and the storage battery are connected to an electric power system that supplies electric power to the ammonia producing device.

2. The marine vessel denitration system according to claim 1, further comprising an electric heater that heats the exhaust gas to be introduced to the denitration catalyst unit, wherein
electric power for the electric heater is supplied from the electric power system.

3. The marine vessel denitration system according to claim 1 or 2, wherein a photovoltaic power generator is connected to the electric power system.

4. The marine vessel denitration system according to any one of claims 1 to 3, wherein an external electric power input unit that receives an electric power supply from an electric power source outside a marine vessel is connected to the electric power system.

5. The marine vessel denitration system according to any one of claims 1 to 4, wherein an electric power generator connected to a turbocharger generating electric power by obtaining rotation energy of an exhaust gas turbocharger of the main engine and/or the electric power generating engine is used as the electric power generator.

6. The marine vessel denitration system according to any one of claims 1 to 5, wherein a power turbine side electric power generator that generates electric power using a power turbine driven by exhaust gas from the main engine and/or the electric power generating engine is used as the electric power generator.

7. The marine vessel denitration system according to any one of claims 1 to 5, wherein a heterogeneous turbine side electric power generator that generates electric power using the power turbine driven by exhaust gas from the main engine and/or the electric power generating engine, and a steam turbine driven by steam generated with an exhaust gas boiler utilizing the exhaust gas from the main engine and/or the electric power generating engine is used as the electric power generator.

8. The marine vessel denitration system according to any one of claims 1 to 5, wherein a steam turbine side electric power generator that generates electric power using a steam turbine driven by steam generated with an exhaust gas boiler utilizing the exhaust gas from the main engine and/or the electric power generating engine is used as the electric power generator.

9. The marine vessel denitration system according to any one of claims 1 to 8, wherein a heat transmitting medium turbine side electric power generator that generates electric power using a turbine driven by a vaporized heat transmitting medium is used as the electric power generator, the heat transmitting medium being vaporized through heat exchange with heated water, the heated water being heated by heat exchange with exhaust gas and/or cooling water of a jacket or an air cooler from the main engine and/or the electric power generating engine.

10. A marine vessel, comprising
a main engine for marine vessel propulsion and/or a electric power generating engine; and
the marine vessel denitration system according to any one of claims 1 to 9.
